# EUROPEAN PATENT SPECIFICATION

(11) **EP 4 379 322 B1**
(45) Date of publication and mention of the grant of the patent: **08.10.2025**
(21) Application number: 22210198.2
(22) Date of filing: 29.11.2022
(51) Int. Cl.: G01C 21/16, G01C 25/00, G01D 21/00

(54) **UTILIZATION OF SENSOR ERROR FLAGS FOR DATA ESTIMATION AND DATA RELIABILITY ESTIMATION IN INERTIAL NAVIGATION**
VERWENDUNG VON SENSORFEHLERFLAGGEN ZUR DATENSCHÄTZUNG UND DATENZUVERLÄSSIGKEITSSCHÄTZUNG IN DER TRÄGHEITSNAVIGATION
UTILISATION DE DRAPEAUX D'ERREUR DE CAPTEUR POUR L'ESTIMATION DE DONNÉES ET L'ESTIMATION DE FIABILITÉ DE DONNÉES DANS LA NAVIGATION INERTIELLE

(43) Date of publication of application: 05.06.2024
(73) Proprietor: Murata Manufacturing Co., Ltd., Nagaokakyo-shi, Kyoto 617-8555 (JP)
(72) Inventor: Finne, Antti, 01690 Vantaa (FI)
(74) Representative: Boco IP Oy Ab

(56) References cited:
- EP-A1- 3 104 126
- US-A1- 2005 114 023
- US-A1- 2015 226 550

## Description

### Field

The present invention relates to a method, a system and a computer program product related to inertial navigation. More particularly, the invention relates to a method, a system and a computer program for utilizing sensor data reliability information for improving inertial navigation.

### Background

Accelerometers and gyroscopes may be implemented as inexpensive microelectromechanical systems (MEMS), nowadays widely available.

An inertial navigation system (INS) is a navigation device that uses motion sensors, such as accelerometers, and rotation sensors, such as gyroscopes, and computer to continuously calculate position, orientation, and velocity of a moving object without need for external references. Velocity determines both speed and direction of movement.

Inertial navigation system calculates current position continually. Typically, six degrees of freedom are considered in the calculation, namely acceleration (Accₓ, Acc_{y}, Acc_{z}) in three directions (x, y, z) and rotation (ωₓ, ω_{y}, ω_{z}) about three axes (θₓ, θ_{y}, θ_{z}). Sensed acceleration is integrated over time, together with an estimate of gravity, to calculate current velocity. Velocity is then integrated to calculate the current position.

A navigation system is an example of a nonlinear dynamic system. One of the problems associated with navigation system development is in estimating various states of the dynamic system. Such estimation typically uses navigation system software. Such an estimation has been made using an extended Kalman filter (EKF) in the navigation system software. In some navigation systems, EKF applies Taylor series expansion and observation equations for nonlinear systems, applies known linear Kalman filter theory using first order terms, and probability density function (PDF) is Presumed to be Gaussian.

In practice, however, EKF has some limitations. One such limitation is that only small errors are allowed to be input to the EKF. If there is non-linear error behavior, updating the covariance matrix will result in biased solutions and inconsistencies due to the first order approximations, thereby making the filter unstable. There are secondary versions of EKF, but they tend to be difficult to use because they are more complex to implement and to compute.

A well-known problem in inertial navigation system is that it suffers from integration drift. Small errors in measurement of acceleration and angular velocity are integrated, which leads into progressively larger errors in velocity and still greater errors in position.

To avoid large drift errors, INS is typically used in collaboration with a GPS or other like, satellite-based navigation system such that position can be periodically corrected. By combining more than one position determining method, accuracy of position can be improved. On the other hand, inertial sensor data is in practice the preferred means to obtain information on pitch, yaw and roll, which are in some applications needed as complementary information for satellite -based location and velocity information. INS may even be the only navigation system available in so called dead reckoning situations when satellite-based navigation data is not available. Dead reckoning is often needed temporarily, for example due to a vehicle driving through a tunnel, to determine location information.

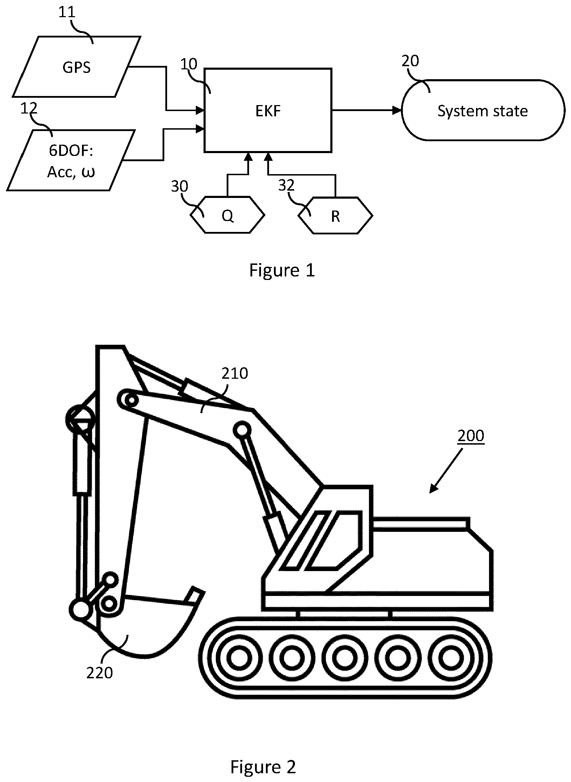

Figure 1 illustrates known operation of Extended Kalman Filter (EKF) in position estimation using a combination of GPS and inertial data as known in the art. The EKF (10) receives GPS location data (11) from a GPS system and inertial data (12) concerning acceleration and rotation data for six degrees of freedom (6DOF) from inertial sensors. In the embodiment illustrated herein, "Q" (30) represents observation noise covariance of 6DOF data (12) and "R" (32) represents process noise covariance of GPS data (11). Q and R, assumed to be zero mean multivariate Gaussian noises, are used as tuning parameters of covariance estimate of the EKF (10). Output of the EKF represents a system state (21) preferably based on both the GPS and inertial data. The estimate of the system state (21) is updated repeatedly by the EKF. Selection of how "Q" and "R" noise covariances are applied depends both on the system modelled by the EKF and design of the EKF itself. Either "Q" or "R" can be used to indicate observation noise covariance that refers to amount of noise in the obtained measurement data.

A major problem in an INS system occurs when inertial data received from any one of the inertial sensors becomes unreliable or temporarily non-existent. This quickly leads to errors in the EKF-based navigation parameters that tend to persist for a long time unless the entire system is reset.

### Description of the related art

Patent application US 2022/055206 A1 discloses that for enabling self-resetting and/or reinitializing sensors, motion of the sensors should be temporarily stopped. When implemented in a machine or a vehicle, this such reset requires stopping motion of the machine or the vehicle, and operation is resumed only after sensors have been reset. In some situations, the machine may be allowed to operate with lower capacity if no sensor reset is performed.

Patent application US 2005/0114023 A1 discloses a method, apparatus and system that executes residual testing steps and isolates effects of one or more faults identified by said test estimates by filtering out data concerning the faulty inertial axis.

Patent application EP 3104126 A1 discloses systems and methods that generate a synthetic sensor signal on basis of other sensor signals to replace a faulty or missing sensor signal.

Patent application US 2015/0226550 A1 discloses handling of measurement errors in estimation of machine position by using duplicated inertial measurement units and localization units.

### Summary

An object is to provide a method and apparatus so as to solve the problem of handling unreliable or unavailable sensor data in INS navigation and to enable quick return to normal operation. The objects of the present invention are achieved with a method according to the characterizing portion of claim 1. The objects of the present invention are further achieved with an apparatus according to the characterizing portion of claim 8.

The preferred embodiments of the invention are disclosed in the dependent claims.

The present invention has the advantage that reliability of estimated sensor data and EKF -based INS navigation variables are improved in case of temporary failure or distortion of sensor operation. Further, maintaining adjusted noise estimates for a limited period of time after the sensor resumes normal operation expedites correcting the EKF internal state back to normal. This way, operation of the EKF does not need to be discontinued and restarted. Thus, also discontinuing operation of the vehicle or machine for re-initializing the navigation system can be avoided.

### Brief description of the drawings

In the following the invention will be described in greater detail, in connection with preferred embodiments, with reference to the attached drawings, in which
Figure 1 illustrates operation of Extended Kalman Filter (EKF) in position and/or location estimation
Figure 2 shows an exemplary vehicle or machine.
Figure 3 illustrates an exemplary implementation using EKF (10) for system state estimation
Figure 4 illustrates method steps according to some embodiments.
Figure 5 illustrates method steps according to some embodiments.
Figure 6 illustrates method steps according to some embodiments.

### Detailed description

The figure 2 shows an exemplary vehicle or machine.

In the following an example of the invention is provided in relation to a machine (200), represented herein by an excavator in which inertial navigation is typically used to supplement GPS or other satellite navigation to improve accuracy of determining location and/or position of a tool (220) coupled to an arm (210). In addition to (geographical) location and velocity typically obtained by use of GPS, variables like pitch and roll (21) of the tool (220) and/or the machine (200) itself are important for accurate controlling of operation of the machine (200).

Both the body of the machine (200) and the tool (220) and/or distal portion of the arm (210) in proximity of the tool (220) may be equipped with inertial sensors, such as accelerometers and gyroscopes, communicatively coupled to a computing device carried by the machine (200) that is configured to apply EKF in calculations for determining location and/or position of the tool (220). Sensor bias and drift errors, as well as drift errors in INS calculations are not in scope of this invention. These are preferably corrected as known in the art.

Modern inertial sensor devices, such as MEMS sensors, are typically provided with self-test capabilities to detect various errors occurring therein. In many applications, self-test capability of the inertial sensor device is mandatory for safety reasons. By the communication means provided, the inertial sensor devices may thus provide indication that one or more of the inertial sensors thereof do not function properly. For example, accuracy of sensor data may be degraded temporarily, or a sensor may be temporarily out of operation. Such temporary disruption of sensor operation may be caused for example by hard hitting the tool on a stone, which may cause one or more of the inertial sensors being subject to motion or force that exceeds its/their detection capabilities. Information of such sensor error situation is preferably communicated to the computing device that performs INS calculations based on the received sensor data using the EKF. The sensor may be capable of providing information on severity of the error occurred. Another indication of a temporary disruption in sensor operation may be that no data is provided by the sensor device and thus no sensor data is received by the computing device.

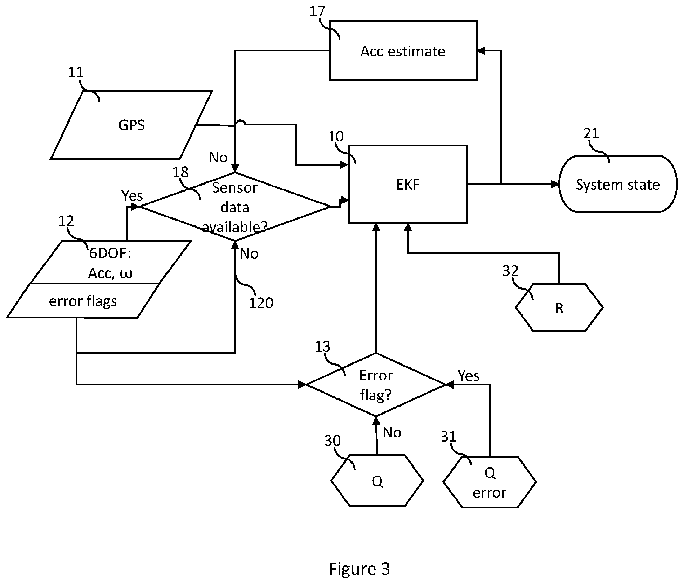

The figure 3 illustrates an exemplary implementation using EKF (10) for system state (21) estimation, which is applicable for example to a tool (220) of a machine. System state determination preferably utilizes GPS data for location estimates when available. For determining position, such as pitch, roll and/or yaw, GPS information (11) can be used for initializing the EKF (10), determining a zero (origo) position and zero velocity. Location information can also be relative if exact geographical location is not needed. For example, position, such as pitch and roll of the tool (220) may be determined independent of geographical location. Therefore, GPS information may be omitted and the system state (21) estimation concerning position (pitch and roll, yaw) of the tool (220) may be started from an assumed position, for example a zero (origo) position, and a static position of the tool may be determined based on acceleration data only and in dynamical motion, position may be determined based on gyroscope data. When gyroscope signals indicate very small rotation values, velocity may be estimated to be equal to zero for purpose of system state estimation. Depending on needs of the respective system, the system state determined by the EKF may comprise one or more system state parameters, such as pitch, roll, yaw, location, speed and/or acceleration.

In the following, operation of the system state estimation shown in the figure 3 is used as an exemplary system in which the invention may be applied for estimating pitch and roll of a tool 220 of a machine 200 shown in the Figure 2. However, the application of the invented improvement is not limited to estimating pitch and roll but is applicable to any parameter comprised in the system state estimated by the EKF, including both position and location determination.

In this example, inertial data (12) received from the inertial sensors comprises information on acceleration (Accₓ, Acc_{y}, Acc_{z}) along three different axes (x, y, z), angular velocity (ωₓ, ω_{y}, ω_{z}) about three different axes, which are preferably the same axes as for acceleration. Error information concerning results of self-testing of the sensors during operation thereof may also be received from the inertial sensors, but also absence of incoming inertial data information may be deemed to indicate an error in an inertial sensor. Both the error information and handling thereof in the EKF may be determined per sensor or per axis.

The invention is agnostic to selection of applied inertial sensors. As known in the art, acceleration along three axes may be detected with at least three separate acceleration sensor devices, or acceleration in three directions may be detected with one three-axis accelerometer or any combination of one and/or two-axis accelerometers. Likewise, angular velocity about three different axes may be detected with at least three different gyroscope devices, or angular velocity about three different axes may be detected by a three-axis gyroscope or with any combination of one and/or two axis gyroscopes. Furthermore, at least one accelerometer and at least one gyroscope may be incorporated into one or more combined inertial sensor devices that provide the inertial information.

Error information may be provided from the one or more sensor device in form of error flags. Error information, such as error flags, may comprise indications of different levels of errors. In this context, we will refer to a "mild error" in an error case where no resetting the respective sensor or sensors is required, but reliability of sensor data is at least temporarily degraded, whereas a "severe error" refers to a case that at least temporarily disables the respective sensor or sensors and/or requires resetting the respective sensor or sensors. The invention does not limit number of error levels to two, but an example with two error severity levels have been discussed in detail for simplicity. In the following examples, we refer to error information from the sensor device(s) as error flags for simplicity. Any suitable method of indicating error is equally applicable.

In the first example situation, quality of inertial sensor data (12) received from at least one inertial sensor is indicated to be degraded, in other words a mild error has occurred. This is typically indicated by rising at least one error flag by the inertial sensor(s). An error flag may represent error of the entire sensor device or error of a single detection axis of the sensor. In the following examples, observation noise covariance is used as the noise estimate. As understood by the skilled person, observation noise covariance can be replaced with another suitable noise estimate that is applicable with the EKF.

In response to detecting an error indication of the mild error, observation noise covariance value of 6DOF data concerning the respective inertial sensor or the respective inertial sensor axis is increased. According to some embodiments, detecting an error flag and increasing an observation noise covariance is indicated as in the figure 3 by step 13, which illustrates the two options available: the EKF uses the "normal" first observation noise covariance value "Q" (30) for respective sensor data, as long as there is no error flag detected concerning the respective sensor, and the EKF uses the error-related second observation noise covariance value "Q error" (31) for the respective sensor data when an error flag is detected concerning the respective sensor or the respective inertial sensor axis. The second observation noise covariance value "Q error" (31) is higher than the first observation noise covariance value "Q" (30).

According to alternative embodiments, the EKF uses first observation noise covariance value "R" for respective sensor data when no error flags are detected and uses an error-related second observation noise covariance value "R error" for the respective sensor data when an error flag is detected. Selection between adjusting "Q" or "R" covariance in response to detecting an error flag depends on the estimated system, design of the EKF and how the physical system is modelled therein.

A typical error situation and thus also period of rising an error flag is temporary. For example, if one or more of the inertial sensors saturates due to a hard collision of the tool against a rock, thus exceeding normal operation range of the at least one inertial sensor with respect to at least one detection axis, this situation is quite short lived and the inertial sensor soon returns to normal operation, which is indicated by removing the error flag. Duration of the error situation may be just some tens or hundreds of milliseconds.

The increased second observation noise covariance value "Q error" (31) is preferably used for some time after the error flag was removed. This facilitates quick return of the EKF to the normal operation. If the first observation noise covariance value "Q" (30) is returned to use by the EKF too quickly, recovery of the EKF from the error situation takes a longer time. This is because using a greater observation noise covariance value allows the EKF to have a greater degree of freedom, which facilitates fast recovery. Using the smaller first observation noise covariance value allows the EKF to update with smaller steps than the greater second observation noise covariance value, which slows down the recovery process after a sensor error.

When the error situation is handled per axis, only one or more observation noise covariance values concerning the one or more axes indicated by respective one or more error flags to be subject to error are increased. When the error situation is handled per sensor, the observation noise covariance value concerning data the respective sensor associated with the error flag is increased.

Exact duration of delaying returning the observation noise covariance value from the second observation noise covariance value "Q error" back to the first observation noise covariance value "Q" depends on many variables, such as types of inertial sensors, characteristics of the error situation as well as amount of change in the observation noise covariance value between normal and error situations. Best values both for the "Q error" and duration of the delay after the sensor error flag is removed can be found by routine experiments. In typical case, length of delay before returning to use of the first observation noise covariance value with the EKF after removal of the error flag is approximately equal to duration of the preceding error situation indicated by the respective error flag.

For example, in the exemplary system tested that controlled navigation of the tool 220 of the exemplary machine 200, a 100 ms delay after removal of the error flag has been found to provide good performance of the EKF. The preferred length of the delay is dependent at least on the measured system, inertial sensors used and implementation of the EKF itself. The best delay value can be determined by routine testing.

If observation noise covariance value was not increased upon detecting an error flag or error flags, the EKF may drift to an erroneous state from which recovery is very slow.

Another exemplary situation occurs when inertial sensor data is severely corrupted or even missing. This may be for example due to a gyroscope drive signal failure, which requires a reset of the gyroscope, which could cause an exemplary time period of 500 ms during which no inertial data is received from the gyroscope. This can be considered as a severe error situation. Such severe error situation may be indicated by an error flag or detected on basis of lack of output signal from the gyroscope. In the figure 3, signal 120 illustrates a situation in which non-availability of sensor data is detected based on at least one error flag.

Similar to the mild error case, the action in the severe error case is, in response to detecting either a severe error flag or totally missing inertial sensor data, to increase the observation noise covariance value from "Q" to "Q error" as described above.

Further, the missing or severely degraded inertial sensor data is replaced with replacement data. Replacement data refers to input data to the EKF that is not based on actual, currently received inertial sensor data. Replacement data may be a zero value, or it may be a non-zero value determined based on the system state determined by the EKF immediately preceding the detected inertial sensor error situation or a value based on actual sensor data immediately preceding the error situation. Replacement data is only used to replace unreliable or missing inertial sensor data, while any available actual inertial sensor data that is considered being valid and available is continued to be used as input to the EKF. The exact method of determining the replacement data depends on application and on the parameter. In this case, we use the excavator (200) example, and the exemplary missing inertial sensor data is gyroscope data, which is missing due to hitting the tool (220) hard to a rock.

In the excavator example, the missing gyroscope data is replaced with a zero estimate as replacement data. Such replacement data is well applicable to the situation in which the tool was hit, as velocity thereof can be assumed to significantly decrease. Another option of determining replacement data is to use the last piece of actual inertial data that preceded the detected error situation and can be assumed to be accurate.

In the exemplary severe error situation with the excavator, replacement acceleration data cannot be assumed to be equal to zero acceleration, because this would indicate free falling to the EKF algorithm. This would cause the position estimate to severely fail.

In the excavator case it can be assumed, that in such shock situation (hitting the tool on a rock), movement of the tool stops or at least significantly decelerates. Thus, acceleration data may be estimated by using acceleration values used in EKF estimations right before the error with respect to direction of gravitational acceleration while the sensor data was still considered reliable. This use of a preceding EKF estimation of acceleration is illustrated in the figure 3 with step 17. A projection of gravitational force can be calculated on each acceleration axis, and these values can be fed as constant acceleration values to the respective acceleration axis values in the EKF until actual data is received again from the accelerometers. Estimated replacement data should have a constant value to avoid feedback effects.

In this example, acceleration estimate (17) from the system state parameters preceding the error situation is used as replacement data for the EKF for acceleration instead of actual inertial sensor data from the accelerometer until the respective sensor has been reset (18) and in operation.

As understood by a skilled person, reasons for error situations experienced by inertial sensors vary between applications, and applicable replacement data is to be selected based on the expected error types occurring in the specific system.

Use of replacement data shall be time-limited. If the detected break in receiving actual inertial sensor information is found to be too long, the algorithm should be stopped and restarted only after the navigation system has resumed to be fully functional. The maximum period of allowing use of replacement data depends on the application and is preferably determined by expected stability of the EKF and possible safety concerns. The maximum period allowed for continuing estimation by the EKF using replacement data can be determined by routine experiments.

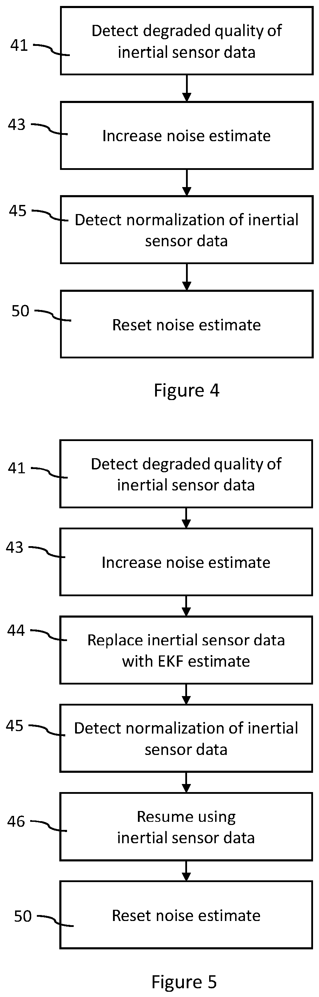

The figure 4 illustrates method steps according to some embodiments.

In the step 41, degraded quality of inertial sensor data is detected. This may be based on detecting one or more error flags.

In the step 43, a noise estimate used by the EKF for the inertial sensor data is increased from a first noise estimate value to a second noise estimate value. The noise estimate that is thereby increased concerns at least one inertial axis or the inertial sensor associated with the inertial sensor data. The second noise estimate value is greater than the first noise estimate value.

In the step 45, normalization of quality of the at least one type of inertial sensor data is detected. This may be based on detecting removal of the one or more error flags.

In the step 50, the temporarily increased noise estimate value used by the EKF calculation is reset back to the first noise estimate value after a predetermined delay period after detecting said normalization of quality in the step 45. After completing the step 50, the EKF is in normal operation.

The figure 5 illustrates method steps according to some embodiments.

In the step 41, degraded quality of inertial sensor data is detected for example based on detecting one or more error flags.

In the step 43, a noise estimate used by the EKF for the inertial sensor data is increased from a first noise estimate value to a second noise estimate value. The noise estimate concerns at least one inertial axis or the inertial sensor associated with the inertial sensor data. The second noise estimate value is greater than the first noise estimate value.

In the step 44, inertial sensor data is temporarily replaced with replacement data. The replacement data may be an EKF estimate of the respective inertial data representing the system state. This replacement data is determined on basis of EKF estimate of the inertial data representing the system state that immediately preceded detecting degraded quality of inertial sensor data. Alternatively, the replacement data may be based on actual inertial sensor data immediately preceding the error situation. The replacement data has a constant value.

Steps 43 and 44 can be performed in any order, and these may also be performed in parallel. Both steps can be initialized by detecting degraded quality, which may be implemented by rising one or more error flags.

In the step 45, normalization of quality of the at least one type of inertial sensor data is detected.

In the step 46 temporary replacement of inertial data by replacement data is discontinued and using actual inertial sensor data as input data for the EKF is resumed. Step 46 may be performed immediately after step 45, and if more than one inertial sensors were associated with error flags, data from each inertial sensor may be used again as soon as the respective inertial sensor has resumed normal operation.

In the step 50, the temporarily increased noise estimate value used by the EKF calculation is reset back to the first noise estimate value after a predetermined delay period after detecting said normalization of quality. After the step 50, the EKF is back in normal operation.

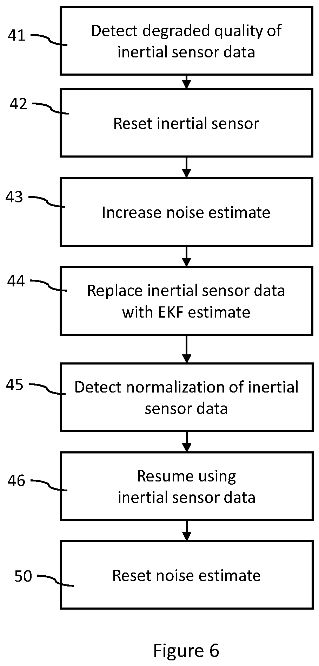

Figure 6 illustrates method steps according to some embodiments.

In the step 41, degraded quality of inertial sensor data is detected. This may occur based on detecting one of more error flags or based on detecting absence of inertial data from one or more sensors.

In the step 42, need to reset the inertial sensor providing degraded quality data is determined, and a reset of the inertial sensor is initialized.

In the step 43, a noise estimate used by the EKF for the inertial sensor data is increased from a first noise estimate value to a second noise estimate value. The noise estimate concerns at least one inertial axis or the inertial sensor associated with the inertial sensor data. The second noise estimate value is greater than the first noise estimate value.

In the step 44, inertial sensor data is temporarily replaced with replacement data. The replacement data may be based on EKF estimate of the respective inertial data. This replacement data is determined on basis of EKF estimate of the inertial data that immediately preceded detecting degraded quality of inertial sensor data. Alternatively, the replacement data may be based on actual sensor data immediately preceding the detected error situation. The replacement data has a constant value.

Steps 42, 43 and 44 can be performed in any order, and these may also be performed in parallel. All three steps can be initialized on basis of detecting degraded quality of inertial data based on one or more error flags or on basis of missing inertial data from one or more sensors.

In the step 45, normalization of quality of the at least one type of inertial sensor data is detected. This may be based on detecting removal or absence of one or more error flags and receiving inertial data from respective inertial sensors.

In the step 46 temporary replacement of inertial data is discontinued and using actual inertial sensor data is resumed. As explained above, step 46 may be performed immediately after step 45 or a delay may be implemented between these two steps.

In the step 50, the temporarily increased noise estimate value used by the EKF calculation is reset back to the first noise estimate value after a predetermined delay period after detecting said normalization of quality. After the step 50, the EKF is back in normal operation.

Operation safety is one main concern when considering use of inertial navigation of a vehicle or a machine. Maximum duration of allowed operation time of the EKF and the vehicle or the machine while no reliable actual inertial sensor data is available may be determined by overall system safety requirements. For example, a maximum amount of movement may be determined for the vehicle or machine or a tool of a machine in any error situation.

In practice, the inertial navigation system should inform the user about an error situation as soon as any sensor error flag is risen, or any sensor does not provide expected sensor data. This allows the user to evaluate operation of the system during the error situation and enables controlled disrupting of operation of the system in a sensor error situation. However, immediate abruption of operation may not always be the safest way of operation. With the invented solution operation of the EKF based inertial navigation can be resumed safely, and unwanted and unnecessary disruptions of operation of the vehicle or machine due to short-lived error situations are at least reduced.

It is apparent to a person skilled in the art that as technology advanced, the basic idea of the invention can be implemented in various ways. The invention and its embodiments are therefore not restricted to the above examples, but they may vary within the scope of the claims.

## Claims

1. A method for inertial navigation applying Extended Kalman Filter ,EKF, (10), comprising:
- detecting (41) degraded quality of inertial sensor data provided by an inertial sensor device, the inertial sensor data (12) concerning at least one inertial axis, wherein said detecting degraded quality is based on any one of: detecting (13) an error flag indicating an error of at least one type of inertial sensor data and detecting absence of at least one type of incoming inertial sensor data,
- in response to said detecting degraded quality, temporarily increasing (43) a noise estimate used by the EKF (10) for the inertial sensor data from a first noise estimate value to a second noise estimate value, wherein the noise estimate concerns the at least one inertial axis or the inertial sensor associated with the inertial sensor data (12), and wherein the second noise estimate value is greater than the first noise estimate value,
- detecting (45) normalization of quality of the at least one type of inertial sensor data (12),
- in response to said detecting normalization of quality, resetting (50) the temporarily increased noise estimate value used by the EKF calculation back to the first noise estimate value after a predetermined delay period after detecting said normalization of quality.

2. The method according to claim 1, wherein the degraded quality indicates a severe error causing unreliable or missing inertial sensor data (12), and the method further comprises:
- temporarily replacing (44) the unreliable or missing inertial sensor data (12) used by the EKF (10) with replacement data having a constant value, and
- resuming (46) to using inertial sensor data by the EKF (10) after detecting that quality of the at least one type of inertial sensor data (12) is normalized.

3. The method according to claim 2, wherein the replacement data is any one of: i) a zero value of the unreliable or missing inertial sensor data (12), ii) an estimate of a system state parameter determined by the EKF (10) immediately before said detecting unreliable or missing inertial sensor data (12), the system state parameter corresponding to the unreliable or missing inertial sensor data (12), and iii) actual inertial sensor data (12) obtained immediately before said detecting the respective inertial sensor data (12) being unreliable or missing.

4. The method according to any one of claims 1 to 3, wherein the type of inertial sensor data (12) belongs to a group comprising: acceleration data concerning acceleration along any one of three different axes, and angular velocity data concerning rotation about any one of three different axes.

5. The method according to any one of claims 1 to 4, wherein the noise estimate is observation noise covariance.

6. The method according to any one of claims 2 to 5, further comprising:
- upon detecting a severe error, causing resetting (42) of the inertial sensor providing degraded quality inertial sensor data (12),
- detecting (45) the inertial sensor resuming normal operation after the resetting,
- resuming (46) use of inertial sensor data (12) from the inertial sensor by the EKF (10) before the step of resetting the temporarily increased noise estimate.

7. The method according to any one of claims 1 to 6, wherein the EKF (10) implements a position estimation such as a pitch estimation and a roll estimation.

8. A system for inertial navigation applying Extended Kalman Filter ,EKF, (10) the system comprising:
- at least one inertial sensor device, and
- a computing device configured to perform an EKF calculation based on inertial sensor data (12) received from the at least one inertial sensor device,
wherein the computing device is configured
- to detect (41) degraded quality of inertial sensor data (12) provided by at least one inertial sensor device, the inertial sensor data (12) concerning at least one inertial axis, wherein said detecting degraded quality is based on any one of: detecting (13) an error flag indicating an error of at least one type of inertial sensor data (12) and detecting absence of at least one type of incoming inertial sensor data (12),
- in response to said detecting degraded quality, to temporarily increase (42) a noise estimate used by the EKF (10) for the inertial sensor data (12) from a first noise estimate value to a second noise estimate value, wherein the noise estimate concerns the at least one inertial axis or the inertial sensor associated with the inertial sensor data (12), and wherein the second noise estimate value is greater than the first noise estimate value,
- to detect (45) normalization of quality of the at least one type of inertial sensor data (12),
- in response to said detecting normalization of quality, to reset (50) the temporarily increased noise estimate value used by the EKF calculation back to the first noise estimate value after a predetermined delay period after detecting said normalization of quality.

9. The system according to claim 8, wherein the degraded quality indicates a severe error causing unreliable or missing inertial sensor data (12), and the computing device is configured:
- to temporarily replace (44) the unreliable or missing inertial sensor data (12) used by the EKF (10) with replacement data having a constant value,
- to resume (46) to use of inertial sensor data (12) by the EKF (10) after detecting that quality of the respective at least one type of inertial sensor data (12) is normalized.

10. The system according to claim 9, wherein the replacement data is any one of: i) a zero value of the unreliable or missing inertial sensor data (12), ii) an estimate of a system state parameter determined by the EKF (10) immediately before said detecting unreliable or missing inertial sensor data (12), the system state parameter corresponding to the unreliable or missing inertial sensor data (12), and iii) actual inertial sensor data (12) obtained immediately before said detecting the respective inertial sensor data (12) being unreliable or missing.

11. The system according to any one of claims 8 to 10, wherein the type of inertial sensor data (12) belongs to a group comprising: acceleration data concerning acceleration along any one of three different axes, and angular velocity data concerning rotation about any one of three different axes.

12. The system according to any one of claims 8 to 11, wherein the noise estimate is observation noise covariance.

13. The system according to any one of claims 9 to 12, wherein the computing device is further configured:
- upon detecting a severe error, to cause resetting (42) of the inertial sensor providing degraded quality inertial sensor data (12),
- to detect (45) the inertial sensor resuming normal operation after the resetting,
- to resume (46) use of inertial sensor data (12) from the inertial sensor by the EKF (10) before the step of resetting the temporarily increased noise estimate.

14. The system according to any one of claims 8 to 13, wherein the EKF (10) is configured to implement position estimation.

## Patentansprüche

1. Verfahren zur Trägheitsnavigation unter Anwendung eines erweiterten Kalman-Filters, EKF, (10), umfassend:
- Erkennen (41) einer verschlechterten Qualität von Inertialsensordaten, die durch eine Inertialsensorvorrichtung bereitgestellt werden, wobei die Inertialsensordaten (12) mindestens eine Trägheitsachse betreffen, wobei das Erkennen der verschlechterten Qualität auf einem von Folgendem beruht: Erkennen (13) eines Fehlerflags, das einen Fehler mindestens einer Art von Inertialsensordaten anzeigt, und Erkennen des Fehlens mindestens einer Art von eingehenden Inertialsensordaten,
- in Reaktion auf das Erkennen einer verschlechterten Qualität, vorübergehendes Erhöhen (43) einer vom EKF (10) verwendeten Rauschschätzung für die Inertialsensordaten von einem ersten Rauschschätzwert zu einem zweiten Rauschschätzwert, wobei die Rauschschätzung die mindestens eine Trägheitsachse oder den mit den Inertialsensordaten (12) verbundenen Inertialsensor betrifft, und wobei der zweite Rauschschätzwert größer als der erste Rauschschätzwert ist,
- Erkennen (45) einer Normalisierung der Qualität mindestens einer Art von Inertialsensordaten (12),
- in Reaktion auf das Erkennen einer Normalisierung der Qualität, Zurücksetzen (50) des von der EKF-Berechnung verwendeten vorübergehend erhöhten Rauschschätzwerts auf den ersten Rauschschätzwert nach einer vorherbestimmten Verzögerungsdauer nach Erkennung der Normalisierung der Qualität.

2. Verfahren nach Anspruch 1, wobei die verschlechterte Qualität einen schwerwiegenden Fehler anzeigt, der unzuverlässige oder fehlende Inertialsensordaten (12) verursacht, und das Verfahren ferner umfasst:
- vorübergehendes Ersetzen (44) der vom EKF (10) verwendeten unzuverlässigen oder fehlenden Inertialsensordaten (12) durch Ersatzdaten mit einem konstanten Wert, und
- Wiederaufnehmen (46) der Verwendung von Inertialsensordaten durch den EKF (10) nach Erkennung, dass die Qualität der mindestens einen Art von Inertialsensordaten (12) normalisiert wird.

3. Verfahren nach Anspruch 2, wobei die Ersatzdaten eines von Folgendem sind: i) ein Nullwert der unzuverlässigen oder fehlenden Inertialsensordaten (12), ii) eine Schätzung eines vom EKF (10) unmittelbar vor der Erkennung der unzuverlässigen oder fehlenden Inertialsensordaten (12) bestimmten Systemzustandsparameters, wobei der Systemzustandsparameter den unzuverlässigen oder fehlenden Inertialsensordaten (12) entspricht, und iii) Ist-Inertialsensordaten (12), die unmittelbar vor der Erkennung, dass die jeweiligen Inertialsensordaten (12) unzuverlässig oder fehlend sind, gewonnen werden.

4. Verfahren nach einem der Ansprüche 1 bis 3, wobei die Art von Inertialsensordaten (12) zu einer Gruppe gehört, die Folgendes umfasst: Beschleunigungsdaten, die eine Beschleunigung entlang einer von drei unterschiedlichen Achsen betreffen, und Winkelgeschwindigkeitsdaten, die die Drehung um eine von drei unterschiedlichen Achsen betreffen.

5. Verfahren nach einem der Ansprüche 1 bis 4, wobei die Rauschschätzung die Kovarianz des Beobachtungsrauschens ist.

6. Verfahren nach einem der Ansprüche 2 bis 5, ferner umfassend:
- bei Erkennung eines schwerwiegenden Fehlers, Veranlassen des Zurücksetzens (42) des die qualitätsverschlechterten Intertialsensordaten (12) bereitstellenden Inertialsensors,
- Erkennen (45), dass der Inertialsensor nach dem Zurücksetzen den Normalbetrieb wieder aufnimmt,
- Wiederaufnahme (46) der Verwendung von Inertialsensordaten (12) des Inertialsensors durch den EKF (10) vor dem Schritt des Zurücksetzens der vorübergehend erhöhten Rauschschätzung.

7. Verfahren nach einem der Ansprüche 1 bis 6, wobei der EKF (10) eine Positionsschätzung wie eine Nickschätzung und eine Rollschätzung realisiert.

8. System zur Trägheitsnavigation unter Anwendung eines erweiterten Kalman-Filters, EKF, (10), wobei das System umfasst:
- mindestens eine Inertialsensorvorrichtung, und
- eine Rechenvorrichtung, die dazu ausgelegt ist, eine EKF-Berechnung auf der Grundlage von aus der mindestens einen Inertialsensorvorrichtung empfangenen Inertialsensordaten (12) durchzuführen,
wobei die Rechenvorrichtung ausgelegt ist zum:
- Erkennen (41) einer verschlechterten Qualität von Inertialsensordaten (12), die durch mindestens eine Inertialsensorvorrichtung bereitgestellt werden, wobei die Inertialsensordaten (12) mindestens eine Trägheitsachse betreffen, wobei das Erkennen der verschlechterten Qualität auf einem von Folgendem beruht: Erkennen (13) eines Fehlerflags, das einen Fehler mindestens einer Art von Inertialsensordaten (12) anzeigt, und Erkennen des Fehlens mindestens einer Art von eingehenden Inertialsensordaten (12),
- in Reaktion auf das Erkennen einer verschlechterten Qualität, vorübergehendes Erhöhen (42) einer vom EKF (10) verwendeten Rauschschätzung für die Inertialsensordaten (12) von einem ersten Rauschschätzwert zu einem zweiten Rauschschätzwert, wobei die Rauschschätzung die mindestens eine Trägheitsachse oder den mit den Inertialsensordaten (12) verbundenen Inertialsensor betrifft, und wobei der zweite Rauschschätzwert größer als der erste Rauschschätzwert ist,
- Erkennen (45) einer Normalisierung der Qualität mindestens einer Art von Inertialsensordaten (12),
- in Reaktion auf das Erkennen einer Normalisierung der Qualität, Zurücksetzen (50) des von der EKF-Berechnung verwendeten vorübergehend erhöhten Rauschschätzwerts auf den ersten Rauschschätzwert nach einer vorherbestimmten Verzögerungsdauer nach Erkennung der Normalisierung der Qualität.

9. System nach Anspruch 8, wobei die verschlechterte Qualität einen schwerwiegenden Fehler anzeigt, der unzuverlässige oder fehlende Inertialsensordaten (12) verursacht, und die Rechenvorrichtung ausgelegt ist zum:
- vorübergehenden Ersetzen (44) der vom EKF (10) verwendeten unzuverlässigen oder fehlenden Inertialsensordaten (12) durch Ersatzdaten mit einem konstanten Wert,
- Wiederaufnehmen (46) der Verwendung von Inertialsensordaten (12) durch den EKF (10) nach der Erkennung, dass die Qualität der jeweiligen mindestens einen Art von Inertialsensordaten (12) normalisiert wird.

10. System nach Anspruch 9, wobei die Ersatzdaten eines von Folgendem sind: i) ein Nullwert der unzuverlässigen oder fehlenden Inertialsensordaten (12), ii) eine Schätzung eines vom EKF (10) unmittelbar vor der Erkennung der unzuverlässigen oder fehlenden Inertialsensordaten (12) bestimmten Systemzustandsparameters, wobei der Systemzustandsparameter den unzuverlässigen oder fehlenden Inertialsensordaten (12) entspricht, und iii) Ist-Inertialsensordaten (12), die unmittelbar vor der Erkennung, dass die jeweiligen Inertialsensordaten (12) unzuverlässig oder fehlend sind, gewonnen werden.

11. System nach einem der Ansprüche 8 bis 10, wobei die Art von Inertialsensordaten (12) zu einer Gruppe gehört, die Folgendes umfasst: Beschleunigungsdaten, die eine Beschleunigung entlang einer von drei unterschiedlichen Achsen betreffen, und Winkelgeschwindigkeitsdaten, die die Drehung um eine von drei unterschiedlichen Achsen betreffen.

12. System nach einem der Ansprüche 8 bis 11, wobei die Rauschschätzung die Kovarianz des Beobachtungsrauschens ist.

13. System nach einem der Ansprüche 9 bis 12, wobei die Rechenvorrichtung ferner ausgelegt ist zum:
- bei Erkennung eines schwerwiegenden Fehlers, Veranlassen des Zurücksetzens (42) des die qualitätsverschlechterten Intertialsensordaten (12) bereitstellenden Inertialsensors,
- Erkennen (45), dass der Inertialsensor nach dem Zurücksetzen den Normalbetrieb wieder aufnimmt,
- Wiederaufnehmen (46) der Verwendung von Inertialsensordaten (12) des Inertialsensors durch den EKF (10) vor dem Schritt des Zurücksetzens der vorübergehend erhöhten Rauschschätzung.

14. System nach einem der Ansprüche 8 bis 13, wobei der EKF (10) dazu ausgelegt ist, eine Positionsschätzung zu realisieren.

## Revendications

1. Procédé pour la navigation inertielle appliquant un filtre Kalman étendu, EKF, (10), comprenant les étapes consistant à :
- détecter (41) une qualité dégradée de données de capteur inertiel fournies par un dispositif de capteur inertiel, les données de capteur inertiel (12) concernant au moins un axe inertiel, ladite détection d'une qualité dégradée étant basée sur l'un parmi : la détection (13) d'un drapeau d'erreur indiquant une erreur d'au moins un type de données de capteur inertiel, et la détection de l'absence d'au moins un type de données de capteur inertiel entrantes,
- en réponse à ladite détection d'une qualité dégradée, augmenter temporairement (43) une estimation de bruit utilisée par l'EKF (10) pour les données de capteur inertiel d'une première valeur d'estimation de bruit à une deuxième valeur d'estimation de bruit, ladite estimation de bruit concernant ledit au moins un axe inertiel ou le capteur inertiel associé aux données de capteur inertiel (12), et ladite deuxième valeur d'estimation de bruit étant supérieure à la première valeur d'estimation de bruit,
- détecter (45) une normalisation de qualité dudit au moins un type de données de capteur inertiel (12),
- en réponse à ladite détection d'une normalisation de qualité, remettre (50) la valeur d'estimation de bruit temporairement augmentée utilisée par le calcul d'EKF à la première valeur d'estimation de bruit après une période de retard prédéterminée après ladite détection d'une normalisation de qualité.

2. Procédé selon la revendication 1, dans lequel la qualité dégradée indique une erreur grave causant des données de capteur inertiel peu fiables ou manquantes (12), et le procédé comprend également les étapes consistant à :
- remplacer temporairement (44) les données de capteur inertiel peu fiables ou manquantes (12), utilisées par l'EKF (10), par des données de remplacement ayant une valeur constante, et
- reprendre (46) l'utilisation de données de capteur inertiel par l'EKF (10) après avoir détecté que la qualité dudit au moins un type de données de capteur inertiel (12) est normalisée.

3. Procédé selon la revendication 2, dans lequel les données de remplacement sont l'un parmi : i) une valeur zéro des données de capteur inertiel peu fiables ou manquantes (12), ii) une estimation d'un paramètre d'état de système déterminé par l'EKF (10) immédiatement avant ladite détection de données de capteur inertiel peu fiables ou manquantes (12), ledit paramètre d'état de système correspondant aux données de capteur inertiel peu fiables ou manquantes (12), et iii) des données de capteur inertiel réelles (12) obtenues immédiatement avant ladite détection du fait que les données de capteur inertiel respectives (12) sont peu fiables ou manquantes.

4. Procédé selon l'une des revendications 1 à 3, dans lequel le type de données de capteur inertiel (12) appartient à un groupe comprenant : des données d'accélération concernant une accélération le long d'un quelconque de trois axes différents, et des données de vitesse angulaire concernant une rotation autour d'un quelconque de trois axes différents.

5. Procédé selon l'une des revendications 1 à 4, dans lequel l'estimation de bruit est la covariance du bruit d'observation.

6. Procédé selon l'une des revendications 2 à 5, comprenant également les étapes consistant à :
- lors de la détection d'une erreur grave, causer la réinitialisation (42) du capteur inertiel fournissant des données de capteur inertiel (12) de qualité dégradée,
- détecter (45) que le capteur inertiel reprend le régime normal après la réinitialisation,
- reprendre (46) l'utilisation, par l'EKF (10), des données de capteur inertiel (12) en provenance du capteur inertiel avant l'étape consistant à remettre en place l'estimation de bruit temporairement augmentée.

7. Procédé selon l'une des revendications 1 à 6, dans lequel l'EKF (10) réalise une estimation de position telle qu'une estimation de tangage et une estimation de roulis.

8. Système pour la navigation inertielle appliquant un filtre Kalman étendu, EKF, (10), ledit système comprenant :
- au moins un dispositif de capteur inertiel, et
- un dispositif informatique configuré pour effectuer un calcul EKF sur la base des données de capteur inertiel (12) reçues en provenance dudit au moins un dispositif de capteur inertiel,
dans lequel le dispositif informatique est configuré pour :
- détecter (41) une qualité dégradée de données de capteur inertiel (12) fournies par au moins un dispositif de capteur inertiel, lesdites données de capteur inertiel (12) concernant au moins un axe inertiel, ladite détection d'une qualité dégradée étant basée sur l'un parmi : la détection (13) d'un drapeau d'erreur indiquant une erreur d'au moins un type de données de capteur inertiel (12), et la détection de l'absence d'au moins un type de données de capteur inertiel entrantes (12),
- en réponse à ladite détection d'une qualité dégradée, augmenter temporairement (42) une estimation de bruit utilisée par l'EKF (10) pour les données de capteur inertiel (12) d'une première valeur d'estimation de bruit à une deuxième valeur d'estimation de bruit, ladite estimation de bruit concernant ledit au moins un axe inertiel ou le capteur inertiel associé aux données de capteur inertiel (12), et ladite deuxième valeur d'estimation de bruit étant supérieure à la première valeur d'estimation de bruit,
- détecter (45) une normalisation de qualité dudit au moins un type de données de capteur inertiel (12),
- en réponse à ladite détection d'une normalisation de qualité, remettre (50) la valeur d'estimation de bruit temporairement augmentée utilisée par le calcul d'EKF à la première valeur d'estimation de bruit après une période de retard prédéterminée après ladite détection d'une normalisation de qualité.

9. Système selon la revendication 8, dans lequel la qualité dégradée indique une erreur grave causant des données de capteur inertiel peu fiables ou manquantes (12), et le dispositif informatique est configuré pour :
- remplacer temporairement (44) les données de capteur inertiel peu fiables ou manquantes (12), utilisées par l'EKF (10), par des données de remplacement ayant une valeur constante,
- reprendre (46) l'utilisation, par l'EKF (10), de données de capteur inertiel (12) après avoir détecté que la qualité dudit au moins un type de données de capteur inertiel (12) est normalisée.

10. Système selon la revendication 9, dans lequel les données de remplacement sont l'un parmi : i) une valeur zéro des données de capteur inertiel peu fiables ou manquantes (12), ii) une estimation d'un paramètre d'état de système déterminé par l'EKF (10) immédiatement avant ladite détection de données de capteur inertiel peu fiables ou manquantes (12), ledit paramètre d'état de système correspondant aux données de capteur inertiel peu fiables ou manquantes (12), et iii) des données de capteur inertiel réelles (12) obtenues immédiatement avant ladite détection du fait que les données de capteur inertiel respectives (12) sont peu fiables ou manquantes.

11. Système selon l'une des revendications 8 à 10, dans lequel le type de données de capteur inertiel (12) appartient à un groupe comprenant : des données d'accélération concernant une accélération le long d'un quelconque de trois axes différents, et des données de vitesse angulaire concernant une rotation autour d'un quelconque de trois axes différents.

12. Système selon l'une des revendications 8 à 11, dans lequel l'estimation de bruit est la covariance du bruit d'observation.

13. Système selon l'une des revendications 9 à 12, dans lequel le dispositif informatique est également configuré pour :
- lors de la détection d'une erreur grave, causer la réinitialisation (42) du capteur inertiel fournissant des données de capteur inertiel (12) de qualité dégradée,
- détecter (45) que le capteur inertiel reprend le régime normal après la réinitialisation,
- reprendre (46) l'utilisation, par l'EKF (10), de données de capteur inertiel (12) avant l'étape consistant à remettre en place l'estimation de bruit temporairement augmentée.

14. Système selon l'une des revendications 8 à 13, dans lequel l'EKF (10) est configuré pour effectuer une estimation de position.
